# EUROPÄISCHE PATENTSCHRIFT

(11) **EP 2 183 826 B1**
(45) Veröffentlichungstag und Bekanntmachung des Hinweises auf die Patenterteilung: **18.01.2012**
(21) Anmeldenummer: 08803337.8
(22) Anmeldetag: 28.08.2008
(51) Int. Cl.: H01R 13/66

(54) **ELEKTRISCHE ANSCHLUßVORRICHTUNG FÜR LEITENDE KONTAKTE, INSBESONDERE MESSERKONTAKTE**
ELECTRICAL CONNECTION APPARATUS FOR CONDUCTIVE CONTACTS, IN PARTICULAR BLADE CONTACTS
DISPOSITIF DE RACCORDEMENT ÉLECTRIQUE POUR CONTACTS CONDUCTEURS, NOTAMMENT CONTACTS À COUTEAUX

(30) Priorität: 29.08.2007 DE 202007012096 U
(43) Veröffentlichungstag der Anmeldung: 12.05.2010
(73) Patentinhaber: Weidmüller Interface GmbH & Co. KG, 32758 Detmold (DE)
(72) Erfinder: BÖNSCH, Matthias, 33659 Bielefeld (DE); HOLTERHOFF, Klaus, 57462 Olpe (DE); BECK, Thorsten, 34454 Bad Arolsen-Wetterburg (DE)
(74) Vertreter: Specht, Peter
(86) Internationale Anmeldenummer: PCT/EP2008/061328
(87) Internationale Veröffentlichungsnummer: WO 2009/027483

(56) Entgegenhaltungen:
- DE-U1-202005 007 592
- US-A1- 2005 224 109

## Beschreibung

Die Erfindung betrifft eine Anschlussvorrichtung für leitende Kontakte an einem Photovoltaikpaneel, wobei die Anschlussvorrichtung erste Anschlusskontakte zum Anschluss der leitenden Kontakte des Photovoltaikpaneels aufweist und zweite Anschlusskontakte zum Anschluss externer Leiter sowie wenigstens eine oder mehrere mit den Anschlusskontakten verbundene Dioden. Eine solche Anschlussvorrichtung ist aus der US-A-20050224 109 bekannt.

Stromerzeugende Photovoltaikanlagen weisen in der Regel wenigstens ein Photovoltaikpaneel zur Stromerzeugung aus Sonnenlicht auf. Dabei sind in der Regel flexible, leicht biegsame Flachleiter aus den Photovoltaikpaneelen herausgeführt, die es ermöglichen, die Photovoltaikpaneele - in der Regel über ein Mehrleiterkabel - beispielsweise an eine Hausinstallation oder zunächst an elektrische Geräte wie einen Wechselrichter oder dgl. anzuschließen.

In der Regel werden die einzelnen flexiblen Flachleiter mittels Einzelklemmen oder dgl. von Hand kontaktiert, was relativ aufwendig ist. Sodann wird über die kontaktierten Flachleiter ein Anschlussgehäuse gesetzt, welches in der Regel eine gewisse Anzahl von Dioden enthält. Da die Anschlussgehäuse in der Regel nur relativ klein dimensioniert werden können, stellt sich die relativ große Wärmeentwicklung dieser Dioden als problematisch dar.

Es ist die Aufgabe der Erfindung, dieses Problem zu lösen.

Die Erfindung löst diese Aufgabe durch den Gegenstand des Anspruchs 1.

Danach sind die Dioden direkt oder über wenigstens eines oder mehrere Bauelemente mit der Oberfläche des Photovoltaikpaneels so verbunden, dass jedenfalls ein Teil der von den Dioden im Betrieb erzeugten Wärme direkt oder über die verbindenden Bauelemente in das Photovoltaikpaneel abgeleitet wird.

Derart wird es auf einfache Weise möglich, auch relativ niedrige Grenztemperaturen zu unterschreiten, da das Photovoltaikpaneel selbst als Wärmeenergie aufnehmendes Kühlelement genutzt wird.

Vorteilhafte Ausgestaltungen sind den Unteransprüchen zu entnehmen.

Nachfolgend wird die Erfindung unter Bezug auf die Zeichnung anhand eines Ausführungsbeispiels näher beschrieben. Es zeigt:
- Fig. 1: eine Sprengansicht einer Anschlussvorrichtung und einen Randbereich eines Photovoltaikpaneels mit Flachleitern;
- Fig. 2: eine perspektivische Ansicht des Randbereichs des Photovoltaikpaneels aus Fig. 1 mit Flachleitern;
- Fig. 3-4: zwei aufeinander folgende Montagezustände beim Kontaktieren der Flachleiter mit der Anschlussvorrichtung;
- Fig. 5: eine perspektivische Ansicht der Anordnung aus Fig. 4 mit Elementen der Anschlussvorrichtung, welche das Anschlussgehäuse aufnimmt;
- Fig. 6: eine perspektivische Ansicht des Randbereichs des Photovoltaikpaneels mit dem darauf angebrachten Anschlussgehäuse;
- Fig. 7: eine perspektivische Ansicht von Elementen der Anschlussvorrichtung aus Fig. 1;
- Fig. 8: eine Sprengansicht einer zweiten Anschlussvorrichtung und einen Randbereich eines Photovoltaikpaneels mit Flachleitern;
- Fig. 9: die Anordnung aus Fig. 8 vor der Installation des Anschlussgehäuses;;
- Fig. 10: eine Schnittansicht der Anordnung aus Fig. 9;
- Fig. 11: eine perspektivische Ansicht eines Teilbereichs eines Photovoltaikpaneels, in der schematisch der Vorgang des Anschlusses der Flachleiter mit der Anschlussvorrichtung dargestellt ist; und
- Fig. 12: eine perspektivische Ansicht des Randbereichs des Photovoltaikpaneels mit dem darauf angebrachten Anschlussgehäuse.

Nachfolgend werden der Aufbau und die Montage von zwei verschiedenen erfindungsgemäßen Anschlussvorrichtungen an einem Photovoltaikpaneel in mehreren aufeinander folgenden Schritten erläutert.

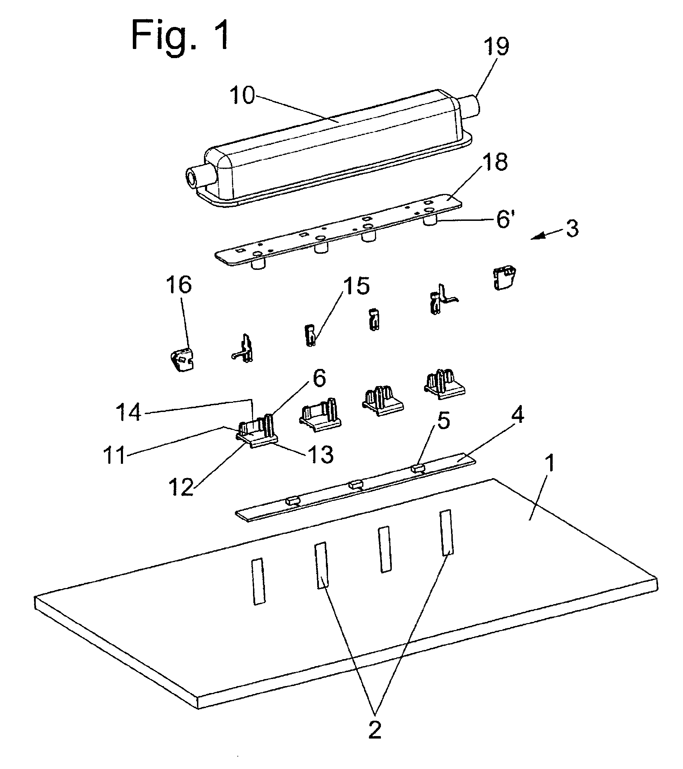

Fig. 1 zeigen jeweils einen Rand eines Photovoltaikpaneels 1, aus dem wenigstens zwei, hier vier, flexible Flachleiterenden 2 vorstehen, die mit Hilfe einer Anschlussvorrichtung 3 zu kontaktieren sind.

Diese Anschlussvorrichtung umfasst ein Bauteil, insbesondere eine Leiterplatte 4, die direkt auf der Oberfläche (hier relativ zum einfallenden Sonnenlicht auf der rückseitigen Oberfläche) des Solarpaneels angebracht ist und auf dem eine oder mehrere Dioden 5 angeordnet sind.

Derart ist es möglich, das Solarpaneel selbst dazu zu nutzen, einen Teil der Wärme aufzunehmen und abzuleiten, welche im Betrieb von der wenigstens einen oder den mehreren Dioden 5 erzeugt wird.

Damit wird es auf möglich, die Betriebstemperatur der Anschlussvorrichtung unterhalb der vorgegebenen einzuhaltenden Grenzwerte zu halten.

Nach Fig. 1 wird die ebene Leiterplatte 4 flächig auf der Oberfläche des Photovoltaikpaneels 1 angebracht, so dass im Bereich der gesamten Leiterplattenfläche eine direkte Wärmeleitung von der Leiterplatte 4 in das Photovoltaikpaneel 1 realisiert wird.

Zur Erhöhung der Wärmeleitfähigkeit ist es denkbar, zwischen die Leiterplatte 4 und das Photovoltaikpaneel 1 ein gut Wärme leitendes Mittel, beispielsweise einen gut Wärme leitenden Klebstoff einzubringen.

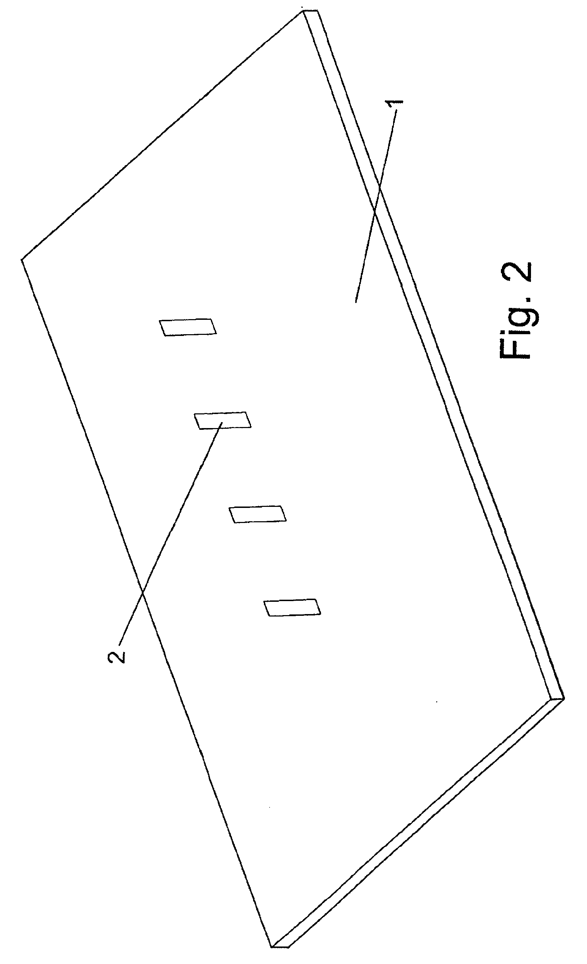

Es ist auch denkbar, die Leiterplatte 4 nicht parallel sondern beliebig winklig, insbesondere rechtwinklig, zum Photovoltaikpaneel anzuordnen (Fig. 2) oder eine in sich winklig, beispielsweise im Querschnitt rechtwinklige ein- oder mehrstückige Leiterplattenanordnung einzusetzen.

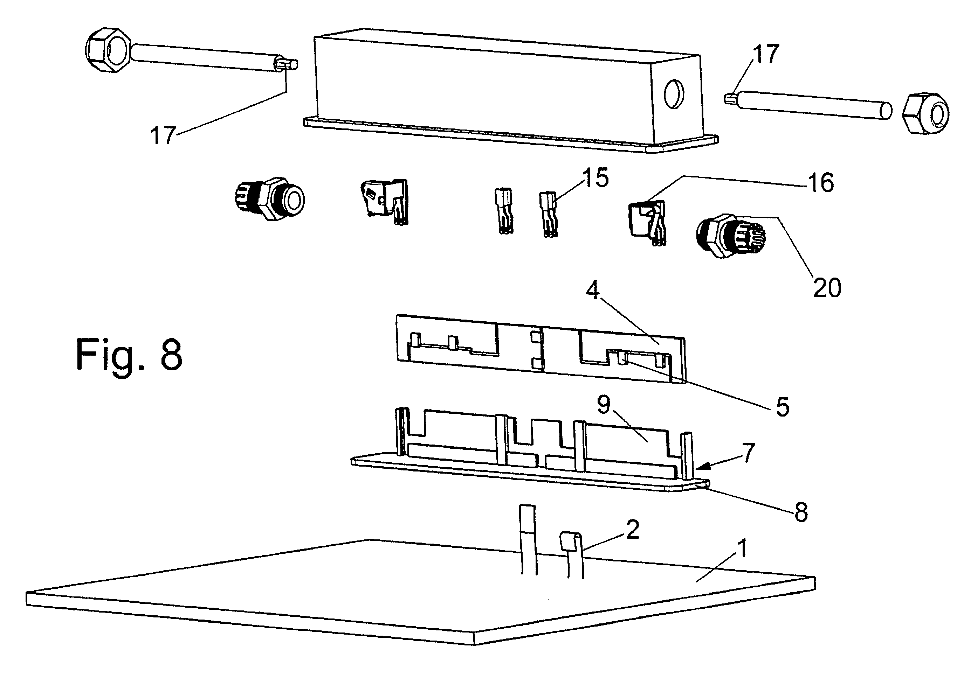

Eine derartige Ausgestaltung zeigt Fig. 8. Nach dieser Lösung wird zunächst eine Art im Schnitt rechtwinkliger Montagerahmen 7 mit einem Schenkel 8 auf der Oberfläche des Photovoltaikpaneels angeordnet, beispielsweise verklebt. Sodann wird die eigentliche Leiterplatte 4 mit der wenigstens einen Diode 5 an dem von der Oberfläche des Photovoltaikpaneels abstehenden Schenkel 9 angebracht.

Derart erfolgt von der Diode 5 über die Leiterplatte 4 und den Montagerahmen 7 wiederum eine Ableitung von Wärme in das Photovoltaikpaneel 1.

Der Vorteil dieser Anordnung ist, dass einerseits eine direkte Wärmeleitung von der Leiterplatte in das Photovoltaikpaneel erfolgt ist und andererseits auch der winklig von dem Photovoltaikpaneel abstehende Bereich dazu genutzt wird, Wärme kühlrippenartig in die Umgebungsluft abzustrahlen.

Zur weiteren Optimierung der Wärmeableitung der Dioden 5 können ergänzende Maßnahmen beitragen. Hierzu gehört der Einsatz einer Leiterplatte 4 mit ein- oder beidseitiger - so weit möglich - metallischer Beschichtung. Denkbar ist es auch, an der Leiterplatte 4 Wärme abstrahlende Rippen vorzusehen. Schließlich ist es denkbar, das Anschlussgehäuse 10, welches über die inneren Bauelemente der Anschlussvorrichtung gesetzt wird, aus einem leitfähigen Kunststoff zu fertigen oder dieses mit Öffnungen zu versehen, welche von einem luftdurchlässigen, z.B. membranartigen Material verschlossen sind (hier nicht dargestellt).

Die Dioden 5 selbst können an der Leiterplatte 4 in verschiedener Technik angeordnet sein, so in SMD-Technik.

Auch die Kontaktierung der Flachleiterenden 2 und die Realisierung einer leitenden Verbindung zwischen den Flachleiterenden 2 und den Dioden 5 kann in verschiedener Weise erfolgen.

So ist es vorteilhaft, nach Art der Fig. 2 und 8 einen oder mehrere Messerkontakteinheiten 11 vorzusehen, die an der der Leiterplatte 4 vormontierbar sind oder an dieser nach der Montage der Leiterplatte 4 auf dem Photovoltaikpaneel 1 montiert werden.

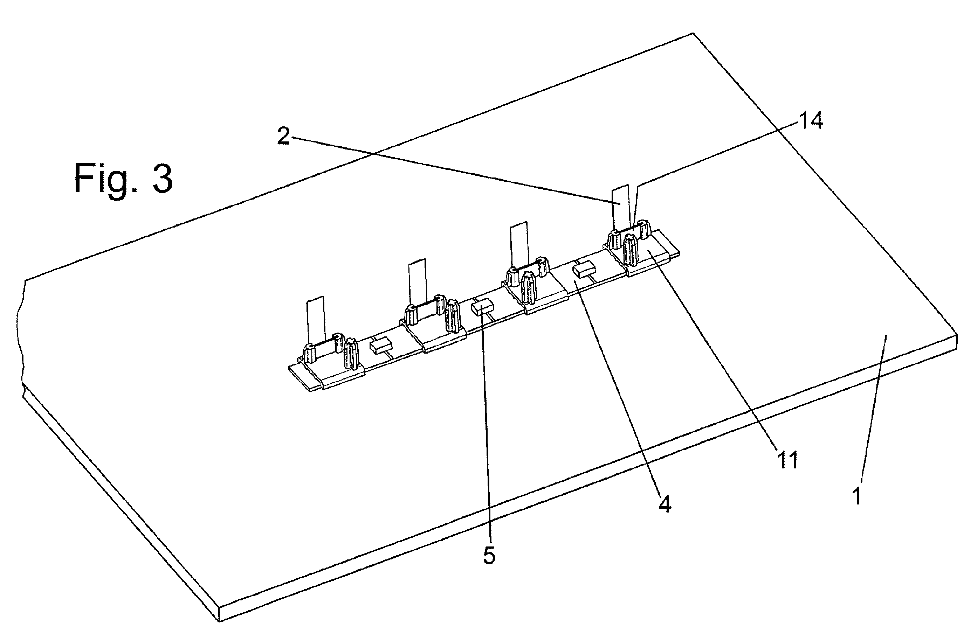

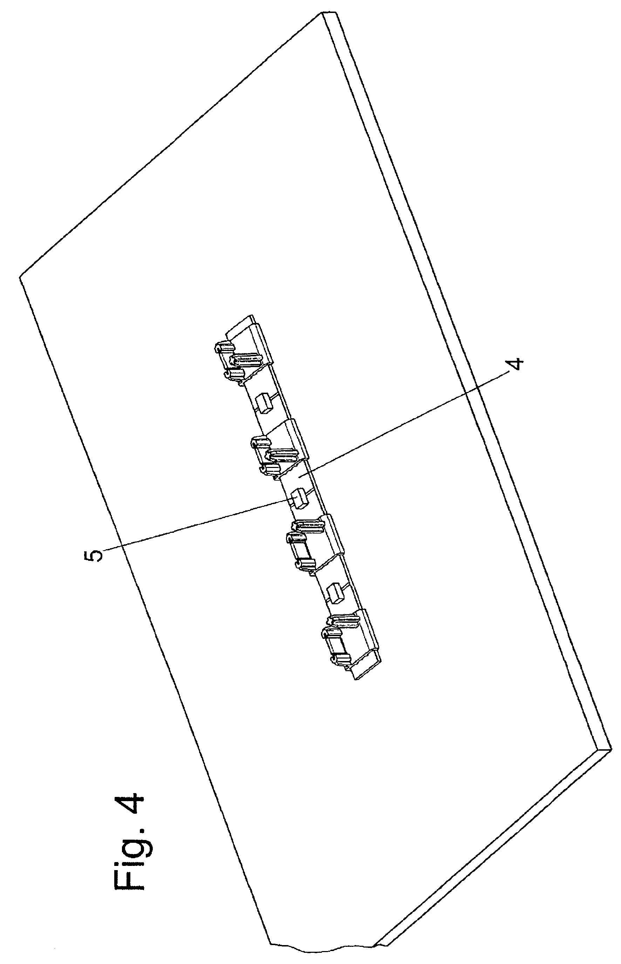

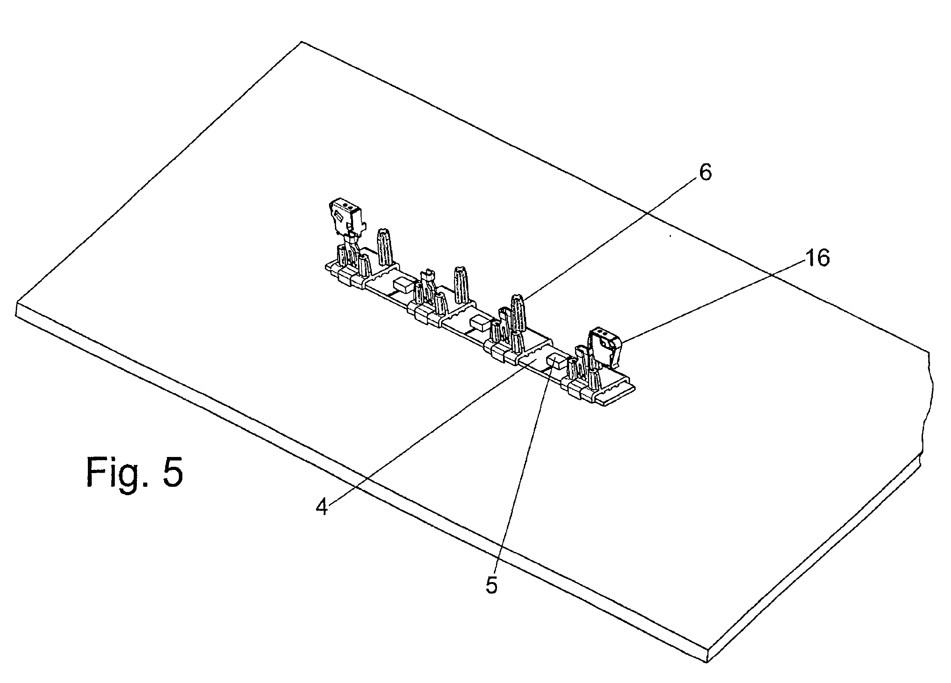

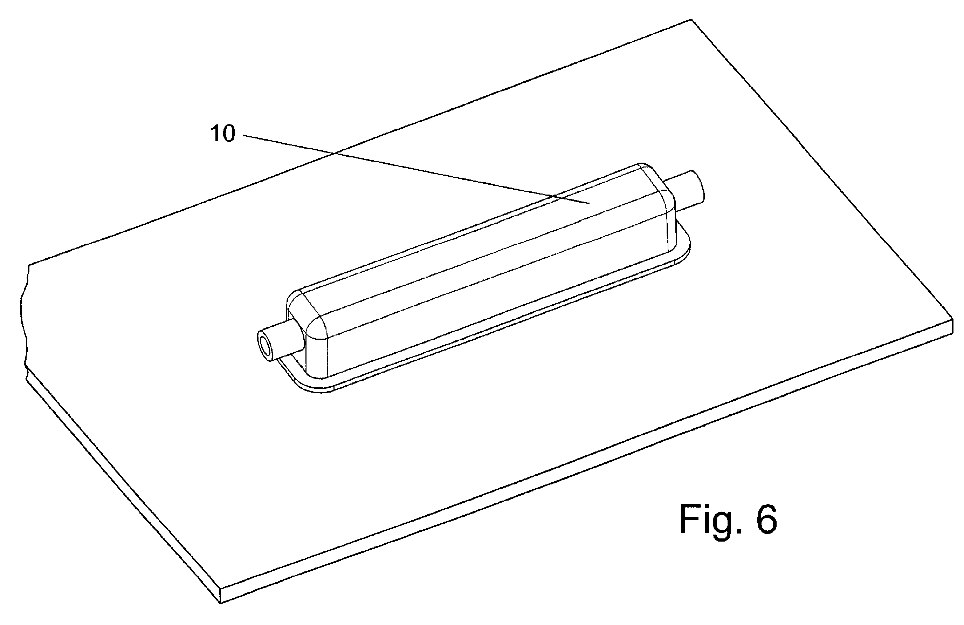

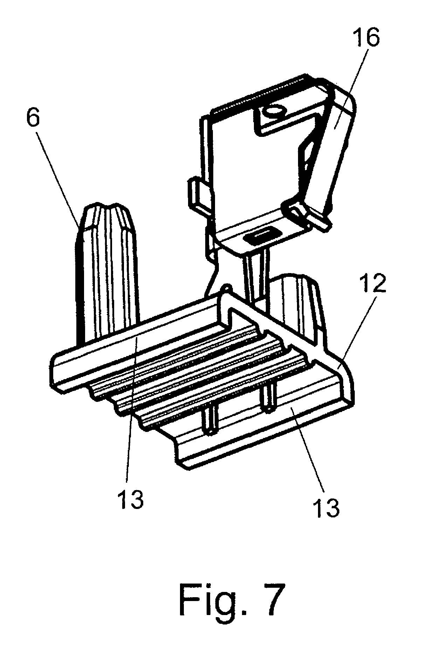

Nach Fig. 1 bis 8 weisen die Messerkontakteinheiten je einen Montagerahmen 12 auf, der z.B. derart ausgestaltet ist, dass er an der Leiterplatte 4 verrastbar ist. Nach Fig. 2 weist er hierzu seitliche Stege 13 auf, welche Ränder der Leiterplatte 4 umgreifen. An den Montagerahmen können Zentrierdorne 6 zum Eingriff in entsprechende Aufnahme 6' im Anschlussgehäuse ausgebildet sein.

Auf den Montagerahmen 12 sind jeweils Messerkontakte 14 angeordnet, die senkrecht zur Leiterplatte 4 ausgerichtet sind.

Nach der Montage der Leiterplatte 4 mit den vormontierten Messerkontakteinheiten 11 an der Photovoltaikpaneeloberfläche werden die Flachleiterenden 2 über die Messerkontakte 14 gebogen, was schnell und einfach zu erledigen ist. Sodann ist es lediglich noch notwendig, das Anschlussgehäuse 10 aufzusetzen.

Das Anschlussgehäuse 10 kann in seinem Inneren direkt oder an einer Montageplatte 18 mit Kontaktklammern 15 versehen sein, die im Zusammenspiel mit den Messerkontakten 14 als erste Anschlusskontakte jeweils dazu ausgelegt sind, die Flachleiterenden 2, welche über die Messerkontakte 14 gebogen wurden, auf diesen festzuklemmen, um eine gute leitende Verbindung sicherzustellen. Das Anschlussgehäuse kann an einem Flansch am Photovoltaikpaneel verklebt werden.

Die Messerkontakte 14 sind vorzugsweise leitend mit der Leiterplatte 4 verbunden, so dass eine durchgängige leitende Verbindung zu den Dioden 5 realisiert wird.

Es bietet sich an, einzelne der Kontaktklammern 15 - hier die äußeren Kontaktklammern der insgesamt hier lang gestreckten schmalen Anordnung, leitend mit Anschlusskontakten 16 zum Anschluss externer Leiter 17 zu verbinden. Die externen Leiter können an Durchführungen 19, 20 des Anschlussgehäuses in dieses eingeführt werden. Es ist vorteilhaft, aber nicht zwingend, die Anschlusskontakte 16 als Direktsteckklemmen (Push-In) auszulegen.

Derart wird eine leicht handhabbare, schnellmontierbare Anschlussvorrichtung realisiert wird, die klein baut und dennoch alle einschlägigen Temperaturgrenzwerte auf einfache Weise einhält.

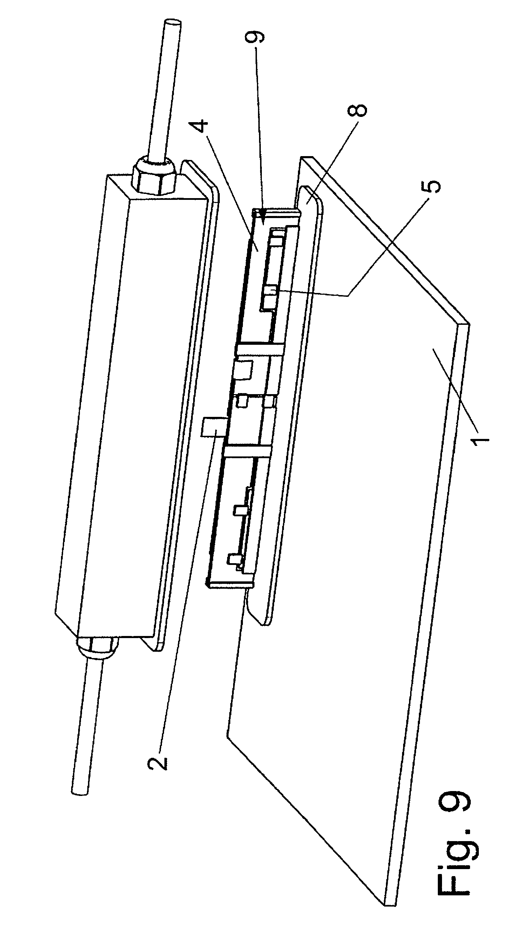

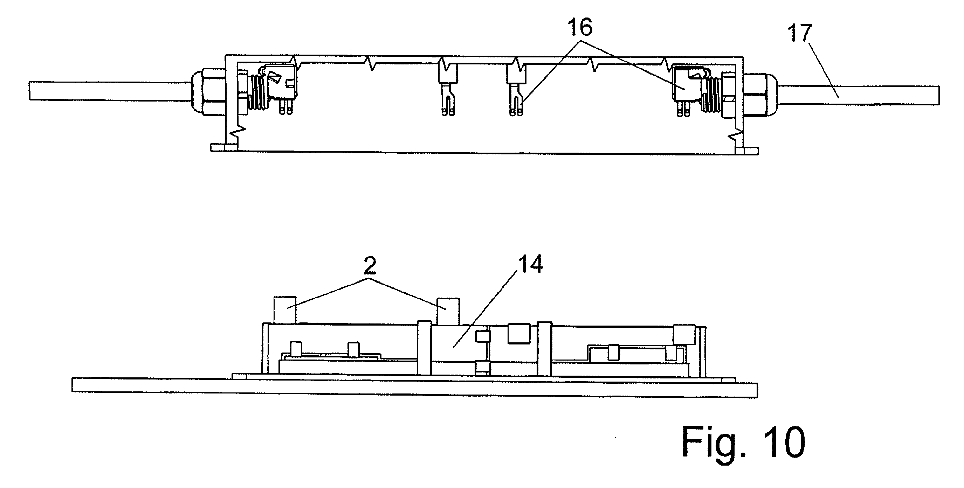

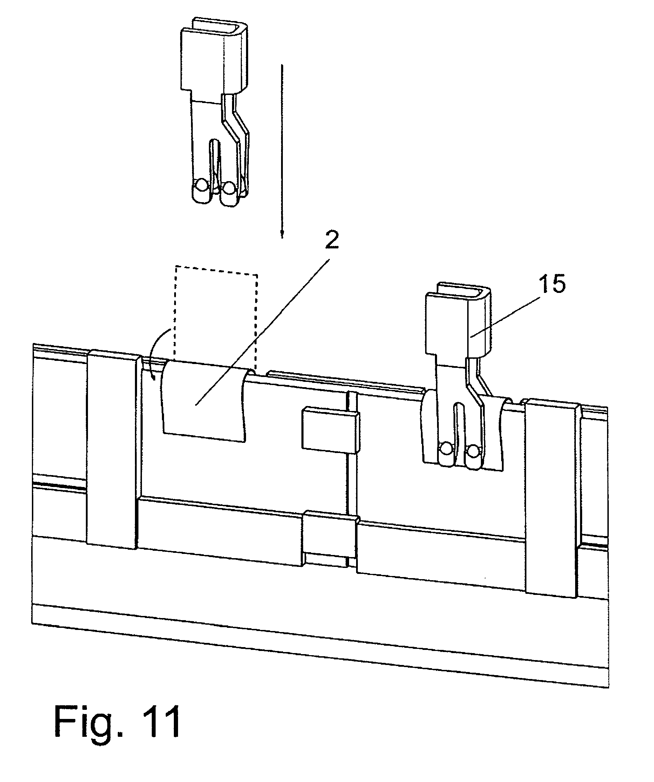

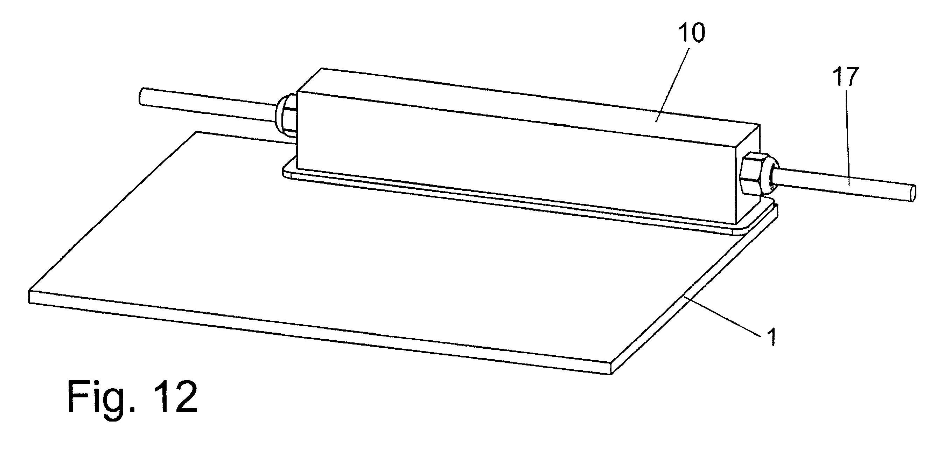

Die Kontaktierung der Leiterplatte 4 der Anordnung aus Fig. 9 - 12 erfolgt ähnlich zur Kontaktierung der Leiterplatte der Fig. 1 bis 8. Allerdings bietet es sich hier an, entweder an der Leiterplatte 4 selbst Messerkontakte anzubringen oder den Leiterplattenrandbereich selbst als Messerkontakte zu nutzen. Die eigentliche Kontaktierung erfolgt wiederum mit Kontaktklammern 15 und einem ansonsten ganz oder weitgehend nach Art des Anschlussgehäuses der Fig. 1 aufgebauten Anschlussgehäuse 10. Die Anschlussgehäuse können auch mit Schraubdurchführungen 20 für die anzuschließenden Leiter versehen sein.

### Bezugszeichen

- Photovoltaikpaneel: 1
- Flachleiterenden: 2
- Anschlussvorrichtung: 3
- Leiterplatte: 4
- Dioden: 5
- Zentrierdorne: 6
- Aufnahme: 6'
- Montagerahmen: 7
- Schenkel: 8
- Schenkel: 9
- Anschlussgehäuse: 10
- Messerkontakteinheiten: 11
- Montagerahmen: 12
- Stege: 13
- Messerkontakte: 14
- Kontaktklammern: 15
- Anschlusskontakte: 16
- Leiter: 17
- Montageplatte: 18
- Durchführungen: 19
- Schraubdurchführung: 20

## Patentansprüche

1. Anschlussvorrichtung für leitende Kontakte (2) an einem Photovoltaikpaneel (1), wobei die Anschlussvorrichtung erste Anschlusskontakte (14, 15) zum Anschluss der leitenden Kontakte (2) des Photovoltaikpaneels aufweist und zweite Anschlusskontakte (16) zum Anschluss externer Leiter (17) sowie wenigstens eine oder mehrere mit den Anschlusskontakten (14, 15) verbundene Dioden (5), **dadurch gekennzeichnet, dass** die wenigstens eine oder mehreren Dioden (5) direkt oder über wenigstens eines oder mehrere Bauelemente (4, 12) mit der Oberfläche des Photovoltaikpaneels (1) so verbunden sind, dass jedenfalls ein Teil der von den Dioden (5) im Betrieb erzeugten Wärme direkt oder über die verbindende Bauelemente in das Photovoltaikpaneel abgeleitet wird.

2. Anschlussvorrichtung nach Anspruch 1 wobei die Dioden (5) auf einer Leiterplatte (4) angeordnet sind, die auf der Oberfläche des Photovoltaikpaneels angebracht ist.

3. Anschlussvorrichtung nach Anspruch 2, wobei die Leiterplatte (4) an einem Montagerahmen (12) angeordnet ist, welcher auf der Oberfläche des Photovoltaikpaneels (1) angebracht ist.

4. Anschlussvorrichtung nach Anspruch 2 oder 3, wobei
die Leiterplatte (4) parallel zur Oberfläche des Photovoltaikpaneels (1) ausgerichtet ist.

5. Anschlussvorrichtung nach Anspruch 2 oder 3, wobei die Leiterplatte (4) winklig zur Oberfläche des Photovoltaikpaneels (1) ausgerichtet ist.

6. Anschlussvorrichtung nach Anspruch 5, wobei die Leiterplatte (4) rechtwinklig zur Oberfläche des Photovoltaikpaneels (1) ausgerichtet ist.

7. Anschlussvorrichtung nach einem der vorstehenden Ansprüche 2 bis 6, wobei die Leiterplatte (4) mit den Dioden (5) auf die Oberfläche des Photovoltaikpaneels (1) aufgeklebt ist.

8. Anschlussvorrichtung nach Anspruch 7, wobei die Leiterplatte (4) mit den Dioden (5) mit einem gut Wärme leitenden Klebstoff auf die Oberfläche des Photovoltaikpaneels (1) aufgeklebt ist.

9. Anschlussvorrichtung nach einem der vorstehenden Ansprüche, 2-8 bzw. 3-8 wobei die Leiterplatte (4) mit den Dioden (5) oder der Montagerahmen (12) in sich rechtwinklig ausgestaltet ist, wobei einer der Schenkel der Leiterplatte (4) oder des Montagerahmens (12) parallel zur Oberfläche des Photovoltaikpaneels ausgerichtet und auf dieser flächig aufliegt.

10. Anschlussvorrichtung nach einem der vorstehenden Ansprüche 2-9, **dadurch gekennzeichnet, dass** die Leiterplatte (4) mit den Dioden (5) einseitig oder zweiseitig ganz oder weitgehend metallisiert ausgebildet ist.

11. Anschlussvorrichtung nach einem der vorstehenden Ansprüche 2-10, **dadurch gekennzeichnet, dass** als die ersten Anschlusskontakte an der Leiterplatte (4) eine oder mehrere Kontakteinheiten (10) mit jeweils einem oder mehreren Messerkontakten (14) angeordnet sind, die mit Kontaktklammern (15) zusammenwirken.

12. Anschlussvorrichtung nach einem der vorstehenden Ansprüche 2-11, **dadurch gekennzeichnet, dass** an der Leiterplatte (4) Messerkontakte (14) oder -bereiche angeordnet oder ausgebildet sind, über welche flexible Flachleiterenden als leitende Kontakte (2) biegbar sind.

13. Anschlussvorrichtung nach Anspruch 12, wobei die Flachleiterenden (2) mittels den Kontaktklammen (15) an den Messerkontakten (14) fixiert sind.

14. Anschlussvorrichtung nach einem der vorstehenden Ansprüche 11-13, wobei das Anschlussgehäuse (10) in seinem Inneren direkt oder an einer Montageplatte (18) mit den Kontaktklammern (15) versehen ist.

15. Anschlussvorrichtung nach einem der vorstehenden Ansprüche 11-14, wobei einzelne der Kontaktklammern (15) leitend mit den zweiten Anschlusskontakten (16) zum Anschluss externer Leiter (17) verbunden sind.

## Claims

1. Connecting device for conductive contacts (2) on a photovoltaic panel (1), wherein the connecting device comprises first connecting contacts (14, 15) for connection of the conductive contacts (2) of the photovoltaic panel and second connecting contacts (16) for the connection of external conductors (17) and also at least one or more diodes (5) connected to the connecting contacts (14, 15), **characterised in that** the at least one or more diodes (5) are connected directly or via at least one or more components (4, 12) to the surface of the photovoltaic panel (1) in such a way that in any case part of the heat produced by the diodes (5) in operation is channelled off directly or via the connecting components into the photovoltaic panel.

2. Connecting device according to claim 1, wherein the diodes (5) are arranged on a circuit board (4) which is arranged on the surface of the photovoltaic panel.

3. Connecting device according to claim 2, wherein the circuit board (4) is arranged on an assembly frame (12) which is arranged on the surface of the photovoltaic panel (1).

4. Connecting device according to claim 2 or 3, wherein the circuit board (4) is orientated parallel to the surface of the photovoltaic panel (1).

5. Connecting device according to claim 2 or 3, wherein the circuit board (4) is orientated at an angle to the surface of the photovoltaic panel (1).

6. Connecting device according to claim 5, wherein the circuit board (4) is orientated at a right angle to the surface of the photovoltaic panel (1).

7. Connecting device according to one of the preceding claims 2 to 6, wherein the circuit board (4) with the diodes (5) is stuck to the surface of the photovoltaic panel (1).

8. Connecting device according to claim 7, wherein the circuit board (4) with the diodes (5) is stuck with an adhesive with good heat conduction to the surface of the photovoltaic panel (1).

9. Connecting device according to one of the preceding claims 2 - 8 or 3 - 8, wherein the circuit board (4) with diodes (5) or the assembly frame (12) is formed at a right angle in itself, wherein one of the limbs of the circuit board (4) or of the assembly frame (12) is orientated parallel to the surface of the photovoltaic panel and lies planarly thereon.

10. Connecting device according to one of the preceding claims 2 - 9, **characterised in that** the circuit board (4) with the diodes (5) is formed on one side or two sides completely or extensively metallised.

11. Connecting device according to one of the preceding claims 2 - 10, **characterised in that** one or more contact units (1) with one or more respective blade contacts (14) are arranged on the circuit board (4) as the first connecting contacts, which blade contacts (14) cooperate with contact brackets (15).

12. Connecting device according to one of the preceding claims 2 - 11, **characterised in that** blade contacts (14) or areas are arranged or formed on the circuit board (4), via which flexible flat conductor ends can be bent as conductive contacts (2).

13. Connecting device according to claim 12, wherein the flat conductor ends (2) are fixed by means of the contact brackets (15) to the blade contacts (14).

14. Connecting device according to one of the preceding claims 11 - 13, wherein the connection housing (10) is provided inside directly or on an assembly plate (18) with the contact brackets (15).

15. Connecting device according to one of the preceding claims 11 - 14, wherein individual contact brackets (15) are conductively connected to the second connecting contacts (16) for the connection of external conductors (17).

## Revendications

1. Dispositif de connexion pour contacts conducteurs (2) sur un panneau photovoltaïque (1), sachant que le dispositif de connexion présente des premiers contacts de connexion (14, 15) pour connecter les contacts conducteurs (2) du panneau photovoltaïque et des deuxièmes contacts de connexion (16) pour connecter des conducteurs externes (17), ainsi qu'au moins une ou plusieurs diodes (5) reliées aux contacts de connexion (14, 15), **caractérisé en ce que** ladite une ou lesdites plusieurs diodes (5) est/sont reliée(s) directement ou par l'intermédiaire d'au moins un ou de plusieurs composants (4, 12) à la surface du panneau photovoltaïque (1) de telle sorte qu'en tout cas une partie de la chaleur produite par les diodes (5) en cours de fonctionnement soit dissipée dans le panneau photovoltaïque, directement ou en passant par les composants de liaison.

2. Dispositif de connexion selon la revendication 1, sachant que les diodes (5) sont disposées sur une carte de circuits imprimés (4) qui est installée à la surface du panneau photovoltaïque.

3. Dispositif de connexion selon la revendication 2, sachant que la carte de circuits imprimés (4) est disposée sur un châssis de montage (12) qui est installé à la surface du panneau photovoltaïque (1).

4. Dispositif de connexion selon la revendication 2 ou 3, sachant que la carte de circuits imprimés (4) est alignée en parallèle à la surface du panneau photovoltaïque (1).

5. Dispositif de connexion selon la revendication 2 ou 3, sachant que la carte de circuits imprimés (4) est alignée sous un angle par rapport à la surface du panneau photovoltaïque (1).

6. Dispositif de connexion selon la revendication 5, sachant que la carte de circuits imprimés (4) est alignée à angles droits par rapport à la surface du panneau photovoltaïque (1).

7. Dispositif de connexion selon l'une quelconque des revendications 2 à 6, sachant que la carte de circuits imprimés (4) avec les diodes (5) est collée sur la surface du panneau photovoltaïque (1).

8. Dispositif de connexion selon la revendication 7, sachant que la carte de circuits imprimés (4) avec les diodes (5) est collée sur la surface du panneau photovoltaïque (1) à l'aide d'un adhésif bon thermoconducteur.

9. Dispositif de connexion selon l'une quelconque des revendications précédentes 2 à 8 ou 3 à 8, sachant que la carte de circuits imprimés (4) avec les diodes (5) ou le châssis de montage (12) présente une configuration rectangulaire, sachant que l'un des côtés de la carte de circuits imprimés (4) ou du châssis de montage (12) est aligné en parallèle à la surface du panneau photovoltaïque et repose sur celui-ci de manière plane.

10. Dispositif de connexion selon l'une quelconque des revendications précédentes 2 à 9, **caractérisé en ce que** la carte de circuits imprimés (4) avec les diodes (5) est réalisée d'un côté ou des deux côtés de manière entièrement ou largement métallisée.

11. Dispositif de connexion selon l'une quelconque des revendications précédentes 2 à 10, **caractérisé en ce que** comme premiers contacts de connexion à la carte de circuits imprimés (4), une ou plusieurs unités de contact (10) sont disposées avec respectivement un ou plusieurs contacts à couteaux (14) qui coopèrent avec des brides de contact (15).

12. Dispositif de connexion selon l'une quelconque des revendications précédentes 2 à 11, **caractérisé en ce que** sur la carte de circuits imprimés (4), des contacts ou zones à couteaux (14) sont disposés ou réalisés par lesquels des extrémités de conducteur plat flexibles peuvent être pliées pour former des contacts conducteurs (2).

13. Dispositif de connexion selon la revendication 12, sachant que les extrémités de conducteur plat (2) sont fixées aux contacts à couteaux (14) au moyen des brides de contact (15).

14. Dispositif de connexion selon l'une quelconque des revendications précédentes 11 à 13, sachant que le boîtier de connexion (10) est muni des brides de contact (15) à l'intérieur de celui-ci, directement ou au niveau d'une plaque de montage (18).

15. Dispositif de connexion selon l'une quelconque des revendications précédentes 11 à 14, sachant que certaines des brides de contact (15) sont reliées en connexion conductrice aux deuxièmes contacts de connexion (16) pour connecter des conducteurs externes (17).
